# DEMANDE DE BREVET EUROPEEN

(11) **EP 0 578 572 A1**
(43) Date de publication de la demande: **12.01.1994**
(21) Numéro de dépôt: 93401765.8
(22) Date de dépôt: 07.07.1993
(51) Int. Cl.: A23J 3/34

(54) **Procédé de préparation enzymatique d'hydrolysats de matières protéiques**

(30) Priorité: 08.07.1992 FR 9208439
(71) Demandeur: SOCIETE ANGEVINE DE BIOTECHNOLOGIE BIOPROX, F-75007 Paris (FR)
(72) Inventeur: Ritzenthaler, G.A.A., F-37110 Auzouer en Touraine (FR)
(74) Mandataire: Colas, Jean-Pierre

(57) **Abrégé**

L'invention concerne un procédé de préparation d'hydrolysats de matières protéiques selon lequel on soumet une matière protéique de départ, mise en suspension dans l'eau, à une séquence d'hydrolyses enzymatiques à l'aide de protéases et de peptidases jusqu'à ce qu'au moins la majeure partie de la matière protéique soit convertie en un hydrolysat soluble contenant de la glutamine libre, caractérisé en ce qu'on ajoute à l'hydrolysat ainsi obtenu de la levure de boulangerie, on ajoute un agent plasmolysant pour provoquer l'autolyse de la levure avec libération de glutaminase, et on laisse agir la glutaminase libérée sur la glutamine libre pendant un temps suffisant pour que cette dernière soit convertie en glutamate, avec la condition supplémentaire que l'hydrolysat auquel on ajoute la levure ne contienne pas plus de 2% en poids de chlorure de sodium.

Utilisation dans l'industrie alimentaire.

## Description

L'invention concerne un procédé de préparation enzymatique d'hydrolysats de matières protéiques.

Le procédé actuel de préparation d'hydrolysats de matières protéiques naturelles par voie acide, principalement par l'acide chlorhydrique, mène à des produits à goûts de bouillon très variés, grâce à la formation d'acides aminés libres, et de produits de réaction et de décomposition entre les acides aminés, les peptides, les sucres et autres éléments présents dans la matière première. Ces hydrolysats présentent aussi un pouvoir exhausteur de goût élevé grâce à leur concentration élevée en glutamate libre.

L'inconvénient de ces produits est qu'un certain nombre d'acides aminés d'intérêt nutritionnel sont détruits au cours du traitement en milieu acide et à chaud, et surtout qu'on a décelé la formation de chlorhydrines (dichloropropanol (DCP) et 3-monochloropropanediol (3-MCPD)) par réaction de l'acide chlorhydrique sur les glycérides toujours présents dans les matières premières protéiques naturelles.

On a proposé aussi de procéder à l'hydrolyse des matières protéiques par voie enzymatique. Un tel procédé ne génère pas de dérivés chlorés, tels que le 3-MCPD ou le DCP, mais n'a donné jusqu'ici que des résultats assez décevants pour la production de produits aromatisants ou exhausteurs de goût.

On peut attribuer cela aux faits suivants :
- le degré d'hydrolyse atteint par les procédés enzymatiques reste très inférieur à ce qu'il est par hydrolyse acide ;
- les réactions à température élevée entre acides aminés et sucres n'ont pas lieu ;
- l'acide glutamique est présent sous forme de glutamine, pratiquement dépourvue de pouvoir exhausteur de goût ;
- ils peuvent présenter un goût amer.

Le problème de l'amertume des hydrolysats de protéines obtenus par voie enzymatique a été résolu par l'emploi de peptidases du commerce ou l'introduction de certains microorganismes de qualité alimentaire.

Il reste que les produits ainsi obtenus manquent de caractère et de pouvoir exhausteur de goût, principalement par suite d'un manque d'acide glutamique ou de glutamate libre.

Un procédé a été proposé qui consiste à soumettre l'hydrolysat enzymatique à une hydrolyse acide modérée pour produire de l'acide glutamique à partir de la glutamine présente sans former de chlorhydrines, mais les produits résultants présentent souvent un goût âcre désagréable.

Il existe donc un besoin pour un procédé de préparation d'hydrolysats de matières protéiques par voie enzymatique qui comblerait les insuffisances des procédés d'hydrolyse enzymatique connus à ce jour, et qui fournisse en particulier un hydrolysat contenant une proportion de glutamate suffisante pour le rendre utilisable comme base aromatisante.

La Demanderesse a entrepris des recherches dans ce domaine et a trouvé, de façon surprenante, que la levure de boulangerie pouvait constituer une source de glutaminase capable de transformer la glutamine libre en glutamate, à l'échelle industrielle.

La présente invention a donc pour objet de fournir un nouveau procédé de préparation d'hydrolysats de matières protéiques qui tire parti de cette découverte.

Plus précisément, l'invention concerne un procédé de préparation d'hydrolysats de matières protéiques selon lequel on soumet une matière protéique de départ, mise en suspension dans l' eau, à une séquence d'hydrolyses enzymatiques à l'aide de protéases et de peptidases jusqu'à ce qu'au moins la majeure partie de la matière protéique soit convertie en un hydrolysat soluble contenant de la glutamine libre, caractérisé en ce qu'on ajoute à l'hydrolysat ainsi obtenu de la levure de boulangerie, on ajoute un agent plasmolysant pour provoquer l'autolyse de la levure avec libération de glutaminase, et on laisse agir la glutaminase libérée sur la glutamine libre pendant un temps suffisant pour que cette dernière soit convertie en glutamate, avec la condition supplémentaire que l'hydrolysat auquel on ajoute la levure ne contienne pas plus de 2% en poids de chlorure de sodium.

Comme matières protéiques de départ on peut utiliser toute matière riche en protéines, d'origine végétale ou animale. Des exemples non limitatifs en sont les tourteaux de soja, le gluten de blé ou de maïs, les déchets de viande animale ou de poissons, etc...

La matière protéique de départ est broyée et mise en bouillie (suspension) dans de l'eau. Cette bouillie est soumise à l'action d'enzymes protéases et peptidases, disponibles dans le commerce, de façon connue en soi, jusqu'à ce qu'au moins la majeure partie de la matière protéique ait été convertie en un hydrolysat soluble contenant de la glutamine libre. Habituellement cet hydrolysat présente un rapport de l'azote aminé à l'azote total de 0,4 à 0,5 mais sa teneur en glutamate libre est inférieure à 0,5% rapportée à la matière sèche du produit. Ces opérations d'hydrolyse par des protéases et peptidases sont bien connues et il n'apparaît pas nécessaire de les décrire ici en détail. Pour plus amples renseignements, on pourra se reporter aux notices techniques diffusées par les fabricants d'enzymes, par exemple par les Sociétés NOVO INDUSTRI, SOLABIA, AMANO, et BIO-CATALYSTS, entre autres.

L'hydrolysat ainsi obtenu est alors ajusté à un pH de 4 à 8, de préférence de 5,5 à 6,5 et à une température de 30 à 50°C, de préférence de 35 à 45°C. On y ajoute alors de la levure de boulangerie vivante (Saccharomyces Cerevisiae) à raison d'environ 10 à 100% en poids de matière sèche de levure par rapport à l'extrait sec de la matière protéique hydrolysée. Pour des raisons économiques, on préfère, toutefois, ajouter de 10 à 50% en poids de matière sèche de levure.

Avantageusement mais non obligatoirement, on laisse en contact la levure avec l'hydrolysat pendant quelques heures à 35-45°C afin de permettre à celle-ci d'adapter son système enzymatique.

La bouillie ou suspension résultante est alors chauffée à une température de 45 à 60°C, de préférence à 48-50°C, puis est additionnée d'un agent plasmolysant organique, volatil ou entraînable à la vapeur, tout en maintenant le pH entre 4 et 8. L'agent plasmolysant provoque l'autolyse de la levure avec libération de glutaminase qui convertit la glutamine en glutamate. On laisse la réaction se poursuivre dans les conditions opératoires sus-mentionnées jusqu'à ce que la quasi-totalité de la glutamine libre soit désamidée. Cela prend habituellement de 24 à 72 heures.

Comme agent plasmolysant on utilise, de préférence, l'acétate d'éthyle à raison de 0,5 à 5% en poids, de préférence de 1 à 2% en poids, par rapport au poids total de la bouillie ou suspension. Il est à noter que le chlorure de sodium ne peut servir d'agent plasmolysant car la glutaminase est très sensible à la teneur en ClNa du milieu. En effet cette teneur ne doit pas excéder 2% en poids.

A la fin de la réaction, on règle le pH, par exemple, entre 5 et 6 et on chauffe le milieu réactionnel à 90-100°C jusqu'à inactivation de l'enzyme.

On sépare alors les matières insolubles du milieu réactionnel par centrifugation ou filtration. Le produit liquide restant est concentré jusqu'à une teneur en matières sèches permettant sa conservation. Par exemple, ledit liquide peut être concentré jusqu'à obtention d'un produit pâteux (par exemple à 70% environ de matières sèches) conservable. En variante, on peut concentrer ledit liquide jusqu'à une teneur en matières sèches de l'ordre de 30-45% en poids, puis le sécher par pulvérisation en une poudre. Au cours de la concentration, l' agent plasmolysant se trouve totalement éliminé. Le produit obtenu (poudre ou pâte ) peut servir de base pour la production d' arômes de viande par chauffage avec des sucres selon la réaction de Maillard. Les produits résultants contiendront habituellement de 3 à 5% en poids de glutamate libre, sur la base des matières sèches, sans ajout de glutamate de sodium exogène.

Les exemples non limitatifs suivants sont donnés dans le but d'illustrer l'invention.

### Exemple 1 (comparatif)

10g de tourteaux de soja sont dispersés dans 65g d' eau, puis soumis à la séquence d' hydrolyses enzymatiques suivantes :
. avec 0,1 g de protéase alcaline issue de B. subtilis (Alcalase 0.6L de NOVO INDUSTRI) à pH 8,5 et à 55°C pendant 8 heures ;
. avec 0,05 g de pancréatine (Pancréatine 3 NF de SOLABIA) à pH 7,8-8,2 et à 40°C pendant 16 heures ; et
. avec 0,05 g de peptidase (Peptidase R de AMANO) à pH 6,0 et à 40°C pendant 24 heures.

En fin d' hydrolyse , le pH de la suspension est ajusté à 5,2 ± 0,2 et les protéases sont inactivées par chauffage à 90°C pendant 30 minutes.

Les matières insolubles sont séparées par centrifugation, puis lavées plusieurs fois avec de l'eau pour récupérer toutes les matières solubles. Ces matières solubles sont ensuite concentrées et séchées.

On obtient ainsi 7,9g d' un produit ayant les caractéristiques suivantes :

| | |
|---|---|
| Azote total (NT) | : 7,9% sur sec |
| Azote d'amine (NA) | : 3,78% sur sec |
| Rapport NA/NT | : 47,8% |
| % d'ions glutamate exprimé en monoglutamate de sodium | : < 0,5% |

Le produit est neutre au goût, non amer, mais peu exhausteur.

### Exemple 2 (selon l'invention)

Au produit en cours d'hydrolyse sous l'action de la peptidase, on ajoute 2g (matière sèche) de levure de boulangerie sous forme de levure pressée à 30-35% en poids de matière sèche. Après 8 heures de contact à 40°C et à pH 6,0, on ajoute 1% d'acétate d'éthyle au milieu qui est ensuite chauffé à 48-50°C pour provoquer l'autolyse de la levure. On maintient cette température et ce pH pendant 48 heures. Après hydrolyse, inactivation des enzymes, séparation des insolubles et séchage, on obtient 9,22g d'un produit dont les caractéristiques sont les suivantes:

| | |
|---|---|
| NT | : 8,8% sur sec |
| NA | : 4,05% sur sec |
| Rapport NA/NT | : 46,1% |
| % d'ions glutamate exprimé en monoglutamate de sodium | : 4,12% |

Ce produit possède un bon goût, très savoureux et exhausteur.

### Exemple 3 (comparatif)

On fait un essai identique à celui de l'exemple 2, si ce n'est qu'on ajoute 3,75g de sel ClNa dans la suspension avant hydrolyse.

On obtient alors un produit dont la teneur en ions glutamate n'est que de 2% pour une teneur en azote total de 6,25%, soit, à teneur en azote égale, de 30% inférieure à ce qu'elle est en l'absence de ClNa.

Cet exemple illustre l'effet défavorable de la présence de ClNa.

## Revendications

1. Procédé de préparation d'hydrolysats de matières protéiques caractérisé en ce qu ' on soumet une matière protéique de départ, mise en suspension dans l'eau, à une séquence d'hydrolyses enzymatiques à l'aide de protéases et de peptidases jusqu'à ce qu'au moins la majeure partie de la matière protéique soit convertie en un hydrolysat soluble contenant de la glutamine libre, on ajoute à l'hydrolysat ainsi obtenu de la levure de boulangerie, on ajoute un agent plasmolysant pour provoquer l'autolyse de la levure avec libération de glutaminase, et on laisse agir la glutaminase libérée sur la glutamine libre pendant un temps suffisant pour que cette dernière soit convertie en glutamate, avec la condition supplémentaire que l'hydrolysat auquel on ajoute la levure ne contienne pas plus de 2% en poids de chlorure de sodium.

2. Procédé selon la revendication 1, caractérisé en ce qu'on ajoute de 10 à 50% en poids de matière sèche de levure par rapport à l'extrait sec de la matière protéique hydrolysée.

3. Procédé selon la revendication 1, caractérisé en ce que la séquence d'hydrolyses enzymatiques préalables à l'addition de la levure comprend des hydrolyses à l'aide d' une protéase alcaline issue de B. subtilis, de pancréatine, et de peptidase.

4. Procédé selon la revendication 1, 2 ou 3, caractérisé en ce que l'agent plasmolysant est l'acètate d'éthyle.

5. Procédé selon la revendication 4, caractérisé en ce qu'on ajoute 0,5 à 5% en poids d'acétate d'éthyle par rapport au poids total de la bouillie en suspension.

6. Hydrolysats produits par un procédé selon l'une quelconque des revendications 1 à 5.

7. L' utilisation des hydrolysats définis à la revendication 6 pour la préparation de bases aromatisantes.
